# EUROPEAN PATENT SPECIFICATION

(11) **EP 2 442 224 B1**
(45) Date of publication and mention of the grant of the patent: **15.07.2020**
(21) Application number: 11184925.3
(22) Date of filing: 12.10.2011
(51) Int. Cl.: G06F 3/048, G06F 3/0482, G06F 3/0488, G06F 3/0484

(54) **Method and apparatus for selecting menu item**
Verfahren und Vorrichtung zur Auswahl eines Menüpunkts
Procédé et appareil de sélection d'un élément de menu

(30) Priority: 15.10.2010 KR 20100100688
(43) Date of publication of application: 18.04.2012
(73) Proprietor: Samsung Electronics Co., Ltd., Suwon-si, Gyeonggi-do, 443-742 (KR)
(72) Inventor: Cho, Seong-Hun, Gyeonggi-do (KR)
(74) Representative: HGF

(56) References cited:
- EP-A2- 1 674 977
- EP-A2- 1 988 444
- EP-A2- 2 151 745
- WO-A2-2006/100642
- JP-A- 2005 092 386
- US-A- 6 104 398
- US-A1- 2004 135 817
- US-A1- 2008 297 482
- US-A1- 2008 307 343
- US-A1- 2008 309 643
- US-A1- 2010 125 787
- US-B2- 7 769 794

## Description

### TECHNICAL FIELD OF THE INVENTION

The present invention relates generally to a method and an apparatus for selecting a menu item in a portable terminal. More particularly, although not exclusively, the present invention relates to a method for selection several menu items easily in a portable terminal.

### BACKGROUND OF THE INVENTION

Currently, with development of electronic communication industries, portable terminals, such as mobile communication terminals (cellular phones), electronic notes, and personal digital assistants (PDA), have become indispensable in modern society. These portable terminals play an important role of transferring information that may change quickly. Under this circumstance, a mobile terminal provides additional functions.

Although these terminals have become multifunctional, overload is too much to meet a user's demand. For example, a user may select items displayed on a terminal by using an input device provided therein. Generally, a terminal using a touchscreen, a keypad or a mouse provides a method of selecting multiple items one by one, which is inefficient. Furthermore, a terminal using a mouse may select multiple items by using a cursor to designate a region covering desired items. However, such an item selecting method also is insufficient because unnecessary items may be selected within the designated region and the unnecessary items should be deselected one by one.

US 2010/125787 discloses an imaging processing apparatus that inputs a coordinate value of a position designated on a screen which displays one or a plurality of objects, compares an input locus expressed by the input coordinate value string with a second locus, which is defined in advance as a locus used to give the instruction to execute a process for an object, and determines whether the input locus is a first locus or the second locus. When it is determined that the input locus is the first locus, the apparatus selects an object from the one or plurality of objects based on the display positions of the input locus and the object on the screen. When it is determined that the input locus is the second locus, the apparatus executes a process designated by the input locus with respect to the selected object.

US 2008/309643 A1 discloses a user interface to support a user selecting content using drag gestures.

EP1674977 A2, EP2151745 A2, EP1988444 A2 and WO 2006/100642 A2 disclose different aspects related to item selection.

US 7769794 B2 discloses a method to group file items according to their category using a pop-up menu.

US 2008/307343 A1 discloses a method to perform different filters, for example based on file type, for selection of files within a file folder.

### SUMMARY OF THE INVENTION

The present invention is defined by the independent claims. The dependent claims define further advantageous embodiments.

In general, references made through this description to merely "embodiment(s)", "exemplary embodiment(s)", "example(s)", "aspect(s)" or "configuration(s)" point to alternative aspects related to the invention but do not necessarily correspond to real realisations of it.

The actual embodiments of the invention fall within the scope of the appended claims.

It is an aim of the embodiments of the invention to solve, mitigate or obviate, at least partly, at least one of the problems and/or disadvantages associated with the prior art. Certain embodiments aim to provide at least one of the advantages described below.

To address the above-discussed deficiencies of the prior art, it is a primary object of certain embodiments to provide at least one of the advantages below. Accordingly, an object of certain embodiments of the present invention is to provide an item selecting method for easily selecting multiple items among items displayed on a terminal.

According to one aspect of the invention, a method for selecting at least one item in a terminal using one of a touch screen and a mouse is provided. The method comprises: displaying a plurality of items; detecting a touch on a region which is located between the plurality of items, wherein the touch is maintained for more than a predetermined time; in response to detecting the touch on the region, displaying a menu list that classifies the plurality of items; and in response to detecting a selection of a menu in the menu list, displaying at least one item among the plurality of the items with a selected status, wherein the at least one item corresponds to the selected menu.

According to a related aspect, a method for selecting an item in a terminal using a touchscreen or a mouse is provided. The method includes displaying items, executing an associative selection mode according to an associative selection mode signal, and selecting items that are classified according to the execution of the associative selection mode.

Other aspects of the invention, and advantages and salient features of aspects and embodiments of the invention will become apparent to those skilled in the art from the following detailed description, which, taken in conjunction with the annexed drawings, discloses embodiments related to the present invention.

According to another related aspect, an apparatus for selecting an item in a terminal using one of a touch screen and a mouse is provided. The apparatus comprises an output unit for displaying items and a control unit for executing an associative selection mode according to an associative selection mode signal, and selecting items that are classified according to the execution of the associative selection mode. The associative selection mode signal is generated by one of touching and holding an unspecified touch region for more than a predetermined time.

According to another aspect there is provided apparatus including a display device, an input device such as a touch screen and a mouse, and a controller, the apparatus being adapted to perform a method according to any one of the above-described aspects or embodiments.

Another aspect of the invention provides a computer program comprising instructions arranged, when executed, to implement a method and/or apparatus in accordance with any one of the above-described aspects. A further aspect provides machine-readable storage storing such a program.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other objects, features and advantages of aspects and embodiments of the present invention will become more apparent from the following detailed description when taken in conjunction with the accompanying drawings in which:
FIG. 1 is a perspective view of terminals according to embodiments of the present invention;
FIG. 2 is a block diagram of a terminal embodying the present invention;
FIG. 3 is a flowchart illustrating a procedure of selecting multiple items in a multi selection mode in a terminal according to an embodiment related to the present invention;
FIG. 4 is a flowchart illustrating a procedure of selecting multiple items in a multi selection mode in a terminal using a touch screen according to an embodiment related to the present invention;
FIG. 5 is a flowchart illustrating a procedure of selecting multiple items in a multi selection mode in a terminal using a mouse according to an embodiment related to the present invention;
FIGS. 6A and 6B are flowcharts illustrating a procedure of selecting multiple items in an associative selection mode in a terminal using a touchscreen or a mouse according to an embodiment related to the present invention (FIG. 6A) and to an embodiment of the present invention (FIG. 6B).
FIGS. 7A and 7B are flowcharts illustrating a procedure of selecting multiple items in an associative multi selection mode in a terminal using a touchscreen or a mouse according to another embodiment related to the present invention;
FIG. 8 illustrates one example of the multi selection mode of FIG. 3;
FIG. 9 illustrates one example of the multi selection mode of FIG. 4;
FIG. 10 illustrates one example of the associative selection mode of FIG. 6A;
FIG. 11 illustrates the associative selection mode of FIG. 6B, according to an embodiment of the present invention;
FIG. 12 illustrates one example of the associative multi selection mode of FIG. 7.

Throughout the drawings, like reference numerals will be understood to refer to like parts, components and structures.

### DETAILED DESCRIPTION OF THE INVENTION

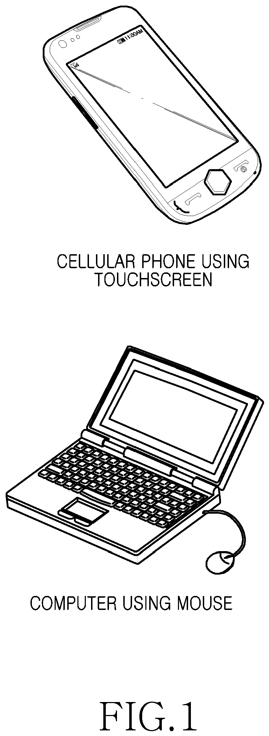

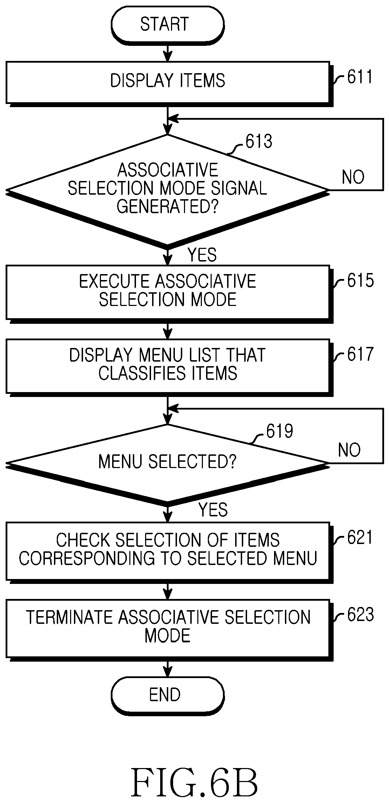

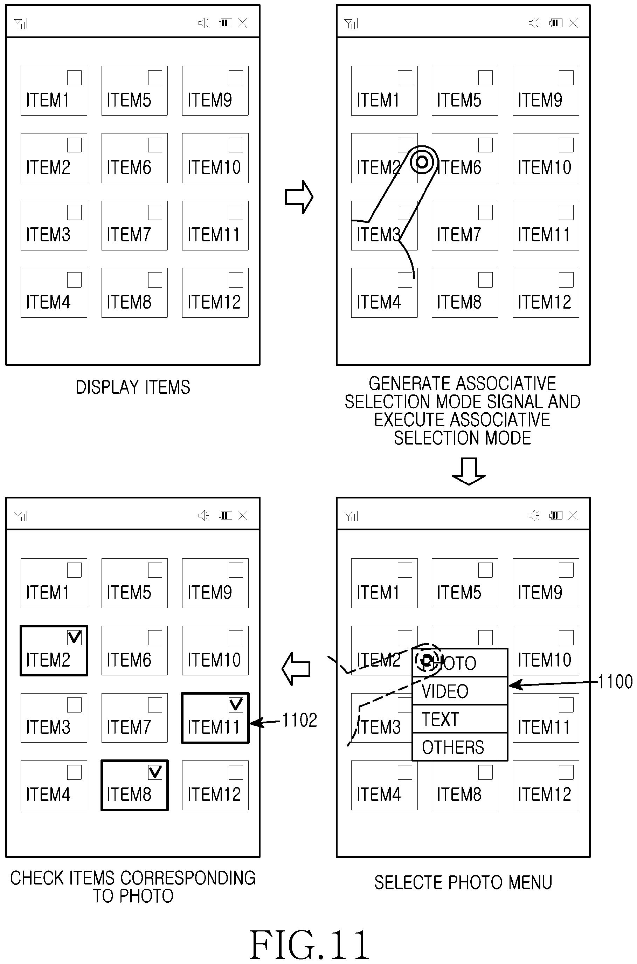

FIGURES 1 through 12, discussed below, and the various embodiments used to describe aspects related to the present invention in this patent document are by way of illustration only and should not be construed in any way to limit the scope of the invention. Those skilled in the art will understand that the principles of the present invention may be implemented in any suitably arranged wireless communication device. Preferred embodiments of the present invention will be described herein below with reference to the accompanying drawings, see figures 6B and 11. Other drawings refer to other embodiments related to the invention, not necessarily falling within the scope of the claims. In the following description, detailed descriptions of well-known functions or configurations will be omitted since they would unnecessarily obscure the subject matters of the present invention. Also, the terms used herein are defined according to the functions of the present invention. Thus, the terms may vary depending on users' or operators' intentions or practices. Therefore, the terms used herein must be understood based on the descriptions made herein.

Hereinafter, methods for easily selecting multiple items among items displayed on a terminal will be described.

FIG. 1 is a perspective view of terminals according to embodiments of the present invention.

Referring to FIG. 1, the terminal includes a display device, such as a Liquid Crystal Display (LCD), which outputs data. In addition, the terminal may include an input device, such as a keypad, a touchscreen, and a mouse. As illustrated in FIG. 1, a cellular phone includes a touchscreen, and a computer includes a mouse. The cellular phone and the computer display items on their display devices. The items are created by listing a multitasking program or codes. A method of selecting a relevant item from the listed items is superior in operability to a command input method. In particular, in the case of an item selecting method using a touch screen according to the present disclosure, items that are present on a touch movement route are selected among the displayed items. In the case of an item selecting method using a mouse according to the present disclosure, items that are present on a mouse drag are selected. For these item selecting methods, a multi selection mode should be provided. The multi selection mode is executed by the generation of a multi selection mode signal. For example, the multi selection mode may be executed when a multi selection mode signal is generated by pressing and holding any one of items on a touchscreen. In addition, the item selecting method using the touchscreen or the mouse according to an embodiment of the present invention may select items having the same associative factor (e.g., a file format, etc.) among the displayed items. For such an item selecting method, an associative selection mode should be provided. The associative selection mode is executed by the generation of an associative selection mode signal. In addition, the terminal according to the present disclosure may execute an associative multi selection mode of selecting items having the same associative factor and then selecting desired items among the selected items. The associative multi selection mode is executed by the generation of an associative multi selection mode signal.

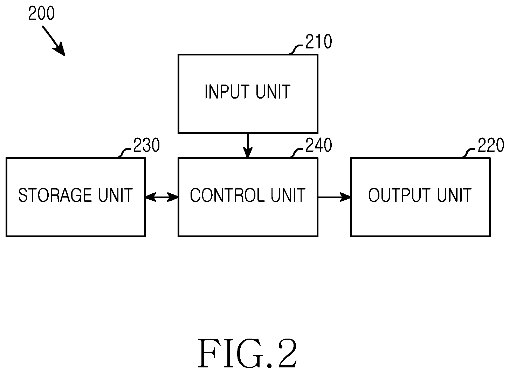

FIG. 2 is a block diagram of a terminal according to an embodiment of the present invention.

Referring to FIG. 2, the terminal 200 includes an input unit 210 for inputting data, an output unit 220 for outputting data, a storage unit 230 for storing various data, and a control unit 240 for controlling an overall operation of the terminal. The input unit 210 may use an input device, such as a touchscreen, a keypad, a mouse, and a microphone. The output unit 220 may include an image output unit for outputting an image, and an audio output unit for outputting an audio. The image output unit may use a display device, such as a Liquid Crystal Display (LCD), and the audio output unit may use a speaker, a receiver, or the like. The storage unit 230 stores various programs and data that are used for operations. The control unit 240 controls an entire system. The control unit 240 controls a series of processes of receiving data from the input unit 210, processing the received data, and transmitting the processing result to the output unit 220. Also, the control unit 240 controls the method of embodiments according to the present invention which will be described in detail.

The output unit 220 displays items under the control of the control unit 240. The control unit 240 executes a multi selection mode, an associative selection mode, or an associative multi selection mode according to a selection signal generated by the input unit 210. In these modes, the control unit 240 confirms that multiple items are selected according to the selection signal generated by the input unit 210.

In particular, as described above, the item selecting method using the touchscreen according to an embodiment related to the present invention selects items that are present on a touch movement route among the displayed items. In addition, the item selecting method using the mouse according to an embodiment related to the present invention selects items that are present on a mouse drag route. Additionally, if the touch movement or the mouse drag passes through unselected items, the corresponding items are selected. If the touch movement or the mouse drag passes through the selected items, the corresponding items are deselected.

Furthermore, the item selecting method using the touchscreen or the mouse according to an embodiment related to the present invention may select items having the same associative factor (e.g., a file format, etc.) among the displayed items.

Moreover, the item selecting method using the touchscreen or the mouse according to an embodiment related to the present invention may mark (or highlight) items having the same associative factor (e.g., a file format, etc.) among the displayed items or reselect or deselect the items that are present on the touch movement route or the mouse drag route.

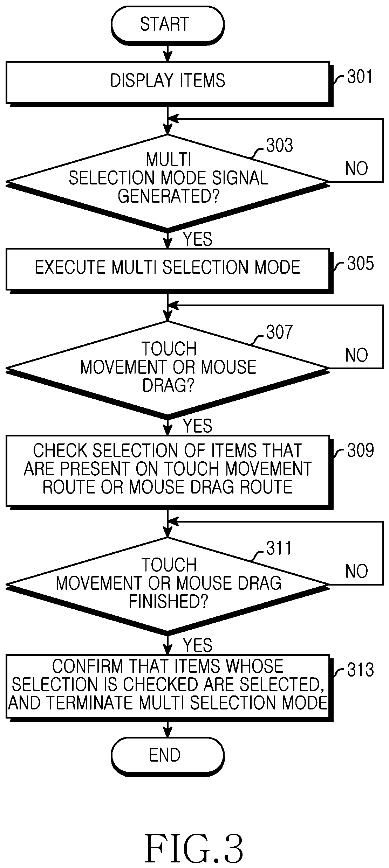

FIG. 3 is a flowchart illustrating a procedure of selecting multiple items in a multi selection mode in a terminal according to an embodiment related to the present invention.

Referring to FIG. 3, the control unit 240 performs a control to display items in step 301. In step 303, the control unit 240 determines whether a multi selection mode signal is generated.

If the control unit 240 determines in step 303 that the multi selection mode signal is generated, the control unit 240 performs a control to execute a multi selection mode in step 305.

If the multi selection mode is executed, the control unit 240 determines whether a touch movement or a mouse drag is detected in step 307.

If the touch movement or the mouse drag is detected in step 307, the control unit 240 checks the selection of items that are present on a touch movement route or a mouse drag route in step 309.

Then, the control unit 240 proceeds to step 311 to determine whether the touch movement or the mouse drag is finished.

If the touch movement or the mouse drag is finished, the control unit 240 proceeds to step 313 to confirm that the items whose selection is checked are selected, and then terminates the multi selection mode.

The multi selection mode signal may be generated by pressing and holding an unspecified item among the displayed items, that is, by touching and holding an unspecified item for more than a predetermined time. Then, when the mode of the terminal is changed to the multi selection mode, items may be selected by a successive touch movement or a new touch movement. In addition, the multi selection mode signal may be generated by pressing and holding an unspecified item among the displayed items, that is, by pressing any one item with a mouse cursor for more than a predetermined time. Then, when the mode of the terminal is changed to the multi selection mode, items may be selected by a successive mouse drag.

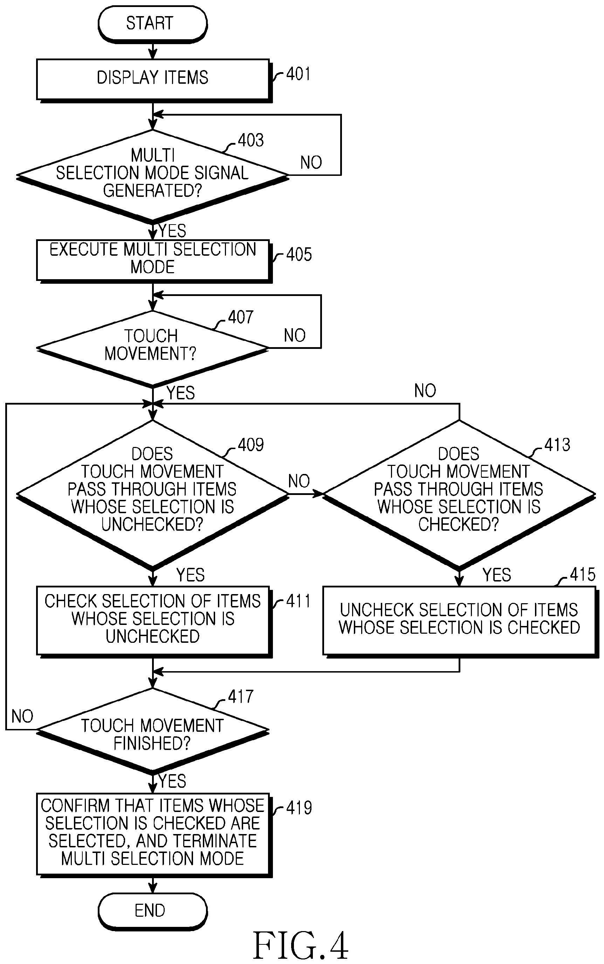

FIG. 4 is a flowchart illustrating a procedure of selecting multiple items in a multi selection mode in a terminal using a touch screen according to an embodiment related to the present invention.

Referring to FIG. 4, the control unit 240 performs a control to display items in step 401. In step 403, the control unit 240 determines whether a multi selection mode signal is generated.

If the control unit 240 determines in step 403 that the multi selection mode signal is generated, the control unit 240 performs a control to execute a multi selection mode in step 405.

If the multi selection mode is executed, the control unit 240 determines whether a touch movement is detected in step 407.

If the touch movement is detected in step 407, the control unit 240 proceeds to step 409 to determine whether the touch movement passes through items whose selection is unchecked. If the control unit 240 determines in step 409 that the touch movement passes through the items whose selection is unchecked, the control unit 240 checks the corresponding items as selected in step 411.

Then, the control unit 240 proceeds to step 417 to determine whether the touch movement is finished. If the touch movement is finished, the control unit 240 proceeds to step 419 to confirm that the items whose selection is checked are selected, and then terminates the multi selection mode. If the touch movement is not finished, the control unit 240 returns to step 409.

In addition, if the control unit 240 determines in step 409 that the touch movement does not pass through the items whose selection is unchecked, the control unit 240 proceeds to step 413 to determine whether the touch movement passes through the items whose selection is checked. If the touch movement does not pass through the items whose selection is checked, the control unit 240 returns to step 409. If the touch movement passes through the items whose selection is checked, the control unit 240 unchecks the corresponding items as selected in step 415. Then, the control unit 240 performs the processes following step 417.

The multi selection mode signal may be generated by pressing and holding an unspecified item among the displayed items, that is, by touching and holding an unspecified item for more than a predetermined time. Then, when the mode of the terminal is changed to the multi selection mode, items may be selected or deselected by a successive touch movement or a new touch movement. In addition, the multi selection mode signal may be generated by touching an unspecified item twice.

In addition, the multi selection mode signal may be generated by pressing and holding a touch area except the displayed items or touching the touch area twice.

Furthermore, the displayed items may include a specific item for generating the multi selection mode signal, and the multi selection mode may be immediately executed by touching the specific item.

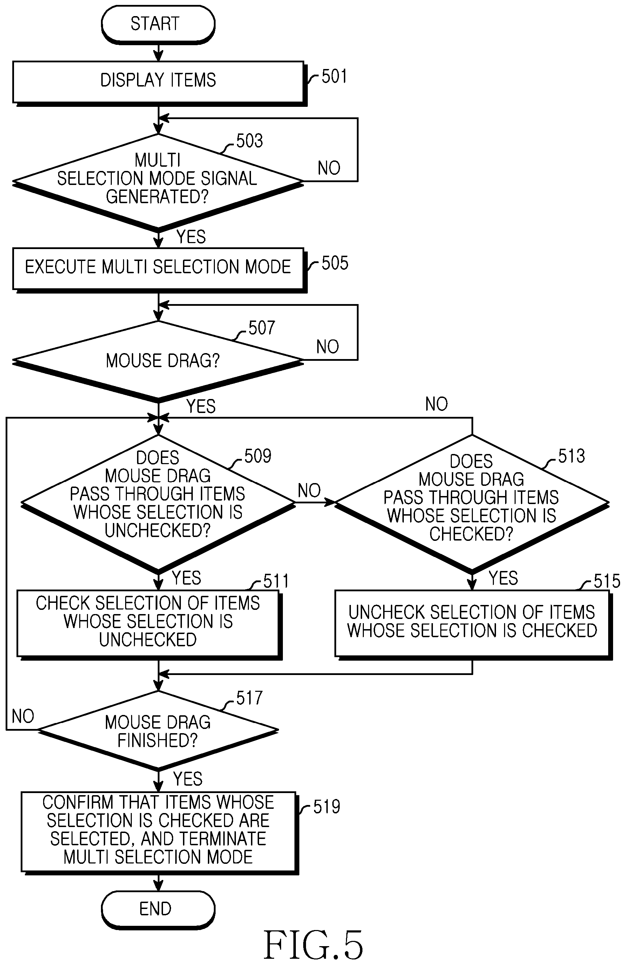

FIG. 5 is a flowchart illustrating a procedure of selecting multiple items in a multi selection mode in a terminal using a mouse according to an embodiment related to the present invention.

Referring to FIG. 5, the control unit 240 performs a control to display items in step 501. In step 503, the control unit 240 determines whether a multi selection mode signal is generated.

If the control unit 240 determines in step 503 that the multi selection mode signal is generated, the control unit 240 performs a control to execute a multi selection mode in step 505.

If the multi selection mode is executed, the control unit 240 determines whether a mouse drag is detected in step 507.

If the mouse drag is detected in step 507, the control unit 240 determines whether the mouse drag passes through items whose selection is unchecked in step 509. If the control unit 240 determines in step 509 that the mouse drag passes through the items whose selection is unchecked, the control unit 240 checks the corresponding items as selected in step 511.

Then, the control unit 240 proceeds to step 517 to determine whether the mouse drag is finished. If the mouse drag is finished, the control unit 240 proceeds to step 519 to confirm that the items whose selection is checked are selected, and then terminates the multi selection mode. If the mouse drag is not finished, the control unit 240 returns to step 509.

In addition, if the control unit 240 determines in step 509 that the touch movement does not pass through the items whose selection is unchecked, the control unit 240 proceeds to step 513 to determine whether the mouse drag passes through the items whose selection is checked. If the mouse drag does not pass through the items whose selection is checked, the control unit 240 returns to step 509. If the mouse drag passes through the items whose selection is checked, the control unit 240 unchecks the corresponding items in step 515. Then, the control unit 240 performs the processes following step 517.

The multi selection mode signal may be generated by pressing and holding an unspecified item among the displayed items, that is, by pressing and holding an unspecified item with a mouse cursor for more than a predetermined time. Then, when the mode of the terminal is changed to the multi selection mode, items may be selected or deselected by a successive mouse drag or a new mouse drag.

Furthermore, in the embodiments illustrated in FIGS. 3 to 5, if the touch movement and the mouse drag arrive at the end of the screen when the multi selection mode is in an active state, the screen may be scrolled to display new items, and the items may be selected by a successive touch movement and a mouse drag on the scrolled screen. However, if there are no items to be displayed on the scrolled screen, the screen is not scrolled.

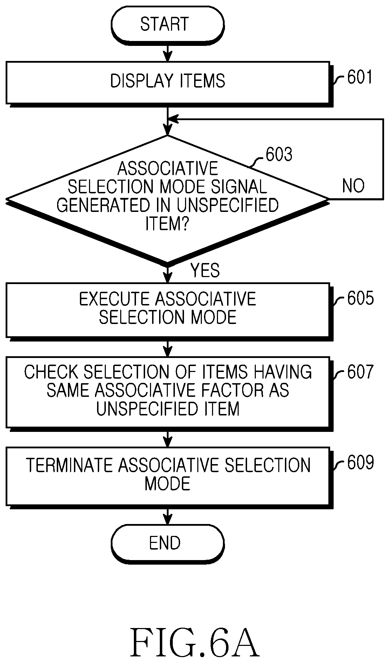

FIGS. 6A and 6B are flowcharts illustrating a procedure of selecting multiple items in an associative selection mode in a terminal using a touchscreen or a mouse according to an embodiment related to the present invention (FIG. 6A) and an embodiment of the present invention (FIG. 6B).

Referring to FIG. 6A, the control unit 240 performs a control to display items in step 601.

In step 603, the control unit 240 determines whether an associative selection mode signal is generated in an unspecified item.

If the associative selection mode signal is generated in the unspecified item, the control unit 240 performs a control to execute an associative selection mode in step 605.

If the associative selection mode is executed, the control unit 240 checks the selection of items having the same associative factor as the unspecified item in step 607. For example, the items whose selection is checked may have the same file format (e.g., a photo file, a video file, a text file, etc.).

Then, the control unit 240 terminates the associative selection mode in step 609.

Referring to FIG. 6B, the control unit 240 performs a control to display items in step 611.

In step 613, the control unit 240 determines whether an associative selection mode signal is generated.

If the associative selection mode signal is generated, the control unit 240 performs a control to execute an associative selection mode in step 615.

If the associative selection mode is executed, the control unit 240 displays a menu list that classifies the items in step 617. The menu list includes a menu that may classify the items displayed in step 611. For example, the menu may be a photo, a video, and a text.

The control unit 240 confirms that the menu is selected in the menu list in step 619, and proceeds to step 621 to check the selection of items corresponding to the selected menu.

In step 623, the control unit 240 terminates the associative selection mode.

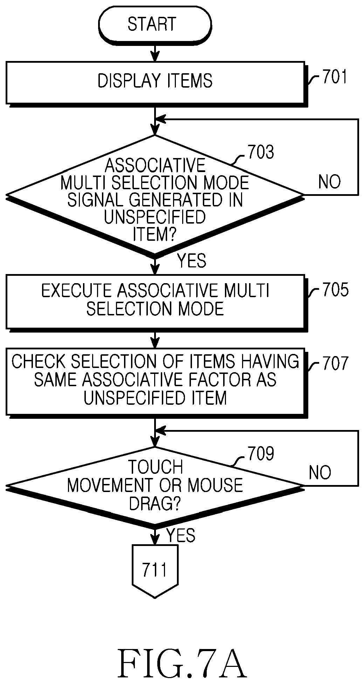

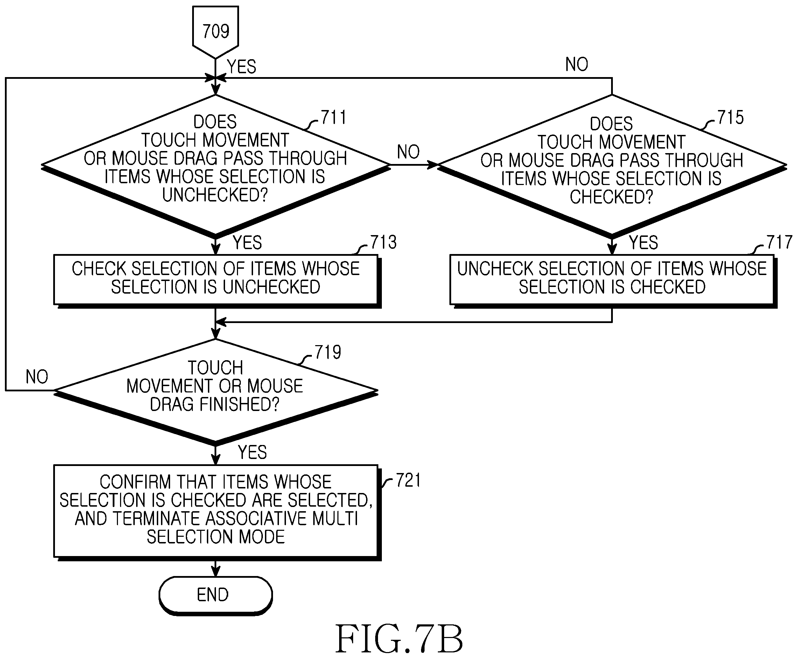

FIGS. 7A and 7B are flowcharts illustrating a procedure of selecting multiple items in an associative multi selection mode in a terminal using a touchscreen or a mouse according to another embodiment related to the present invention. Referring to FIGS. 7A and 7B, the control unit 240 performs a control to display items in step 701.

In step 703, the control unit 240 determines whether an associative multi selection mode signal is generated in an unspecified item.

If the associative multi selection mode signal is generated in the unspecified item, the control unit 240 performs a control to execute an associative multi selection mode in step 705.

If the associative multi selection mode is executed, the control unit 240 checks the selection of items having the same associative factor as the unspecified item in step 707. For example, the items whose selection is checked may have the same file format (e.g., a photo file, a video file, a text file, etc.).

Then, the control unit 240 proceeds to step 709 to determine whether a touch movement or a mouse drag is detected. The touch movement or the mouse drag may be a touch movement successive to the touch of the unspecified item or a drag successive to a mouse click.

If the touch movement or the mouse drag is detected in step 709, the control unit 240 determines whether the touch movement or the mouse drag passes through the items whose selection is unchecked. If the touch movement or the mouse drag passes through the items whose selection is unchecked, the control unit 240 checks the selection of the corresponding items again in step 713.

Then, the control unit 240 proceeds to step 719 to determine whether the touch movement or the mouse drag is finished. If the touch movement or the mouse drag is finished, the control unit 240 proceeds to step 721 to confirm that the items whose selection is checked are selected, and then terminates the associative multi selection mode. If the touch movement or the mouse drag is not finished, the control unit 240 returns to step 711.

If the touch movement or the mouse drag does not pass through the items whose selection is unchecked in step 711, the control unit 240 proceeds to step 715 to determine whether the touch movement or the mouse drag passes through the items whose selection is checked. If the touch movement or the mouse drag does not pass through the items whose selection is checked, the control unit 240 returns to step 711. If the touch movement or the mouse drag passes through the items whose selection is checked, the control unit 240 unchecks the selection of the corresponding items in step 717. Then, the control unit 240 performs the processes following step 719.

The associative multi selection mode signal may be generated by pressing and holding an unspecified item, that is, by touching and holding an unspecified item for more than a predetermined time. Then, when the mode of the terminal is changed to the associative multi selection mode, items may be selected by a successive touch movement or a new touch movement. In addition, the associative multi selection mode signal may be generated by pressing and holding an unspecified item among the displayed items, that is, by pressing and holding an unspecified item with a mouse cursor for more than a predetermined time. Then, when the mode of the terminal is changed to the associative multi selection mode, items may be selected by a successive mouse drag.

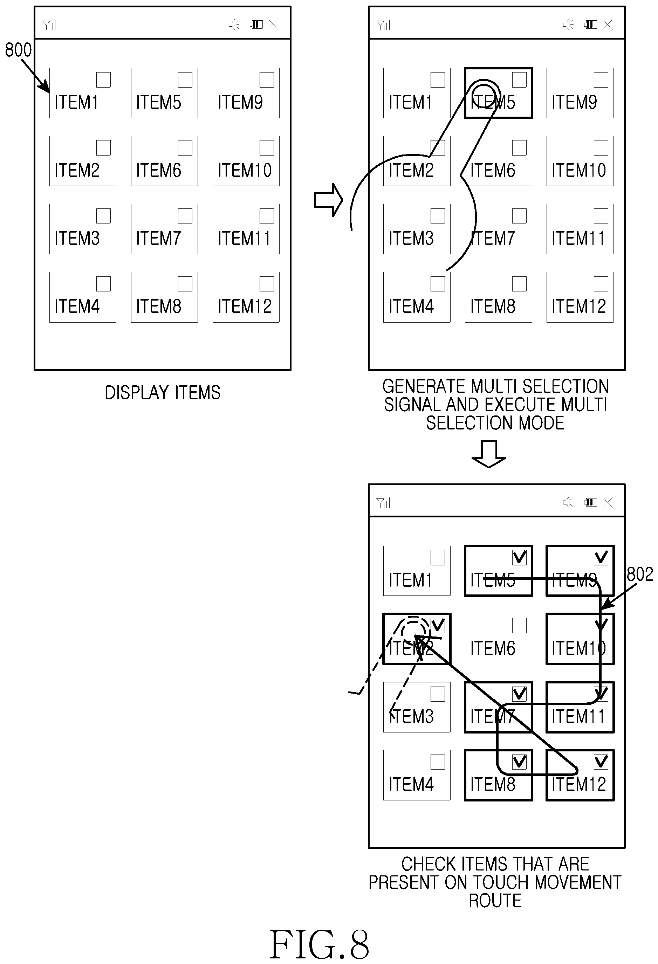

FIG. 8 illustrates one example of the multi selection mode of FIG. 3.

Referring to FIG. 8, items 800 are displayed. If a multi selection mode signal is generated in an unspecified item (in this example, an item 5) among the displayed items, a multi selection mode is executed. The multi selection mode signal may be generated by touching and holding an unspecified item for more than a predetermined time. In the multi selection mode, if a touch movement successive to the touch occurs, items that are present on the touch movement route 802 are checked as selected.

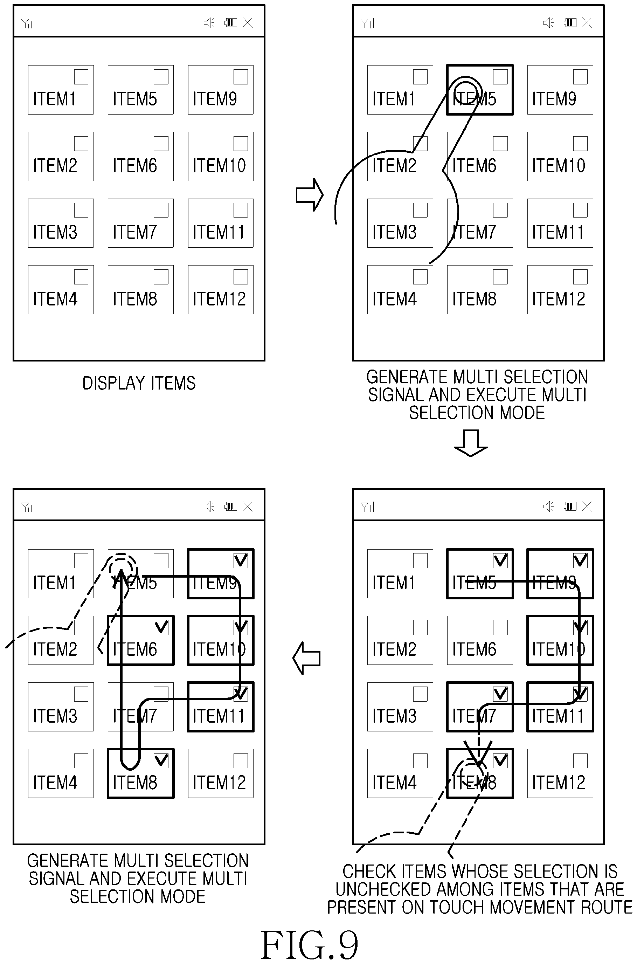

FIG. 9 illustrates one example of the multi selection mode of FIG. 4.

Referring to FIG. 9, items are displayed. If a multi selection mode signal is generated in an unspecified item (in this example, an item 5) among the displayed items, a multi selection mode is executed. The multi selection mode signal may be generated by touching and holding an unspecified item for more than a predetermined time. In the multi selection mode, if a touch movement successive to the touch occurs, items 5, 9, 10, 11, 7 and 8 whose selection is unchecked among the items that are present on the touch movement route are checked as selected. In addition, items 7 and 5 whose selection is checked among the items that are present on the touch movement route are checked as deselected.

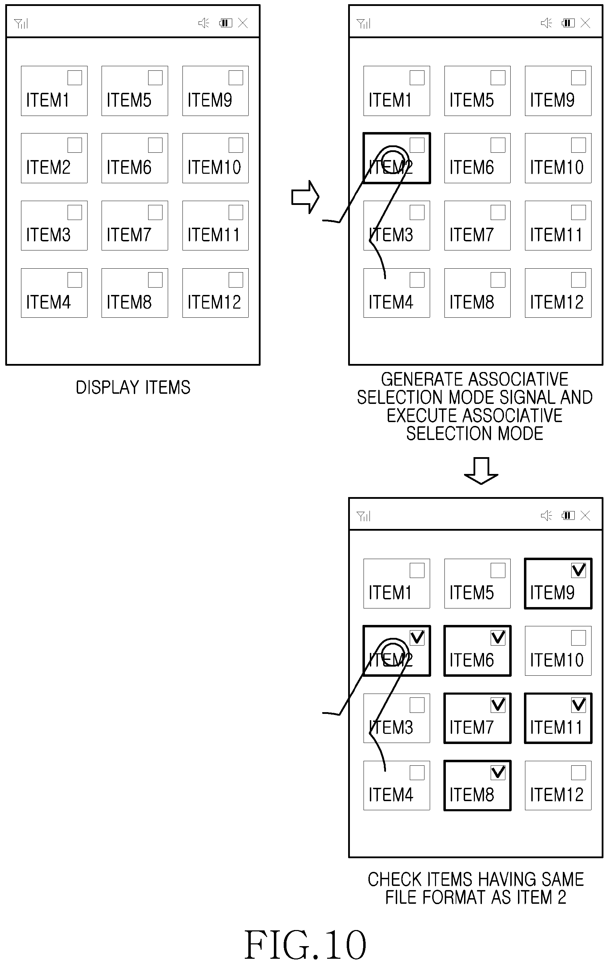

FIG. 10 illustrates one example of the associative selection mode of FIG. 6A.

Referring to FIG. 10, items are displayed. If an associative selection mode signal is generated in an unspecified item (in this example, an item 2) among the displayed items, an associative selection mode is executed. The associative selection mode signal may be generated by touching and holding an unspecified item for more than a predetermined time. If the associative multi selection mode is executed, items 2, 6, 7, 8, 9 and 11 having the same file format as the item 2 are checked as selected.

FIG. 11 illustrates the associative selection mode of FIG. 6B according to an embodiment of the present invention.

Referring to FIG. 11, items are displayed. If an associative selection mode signal is generated, an associative selection mode is executed. The associative selection mode signal may be generated by touching and holding an unspecified region for more than a predetermined time. The associative multi selection mode displays a menu list 1100 that classifies the items. The menu list 1100 includes a menu that can classify the items. As illustrated in FIG. 11, the menu may be a photo, a video, a text, and others. If any one menu (in this example, photo) is selected in the menu, items 2, 8 and 11 1102 corresponding to the photo are checked as selected.

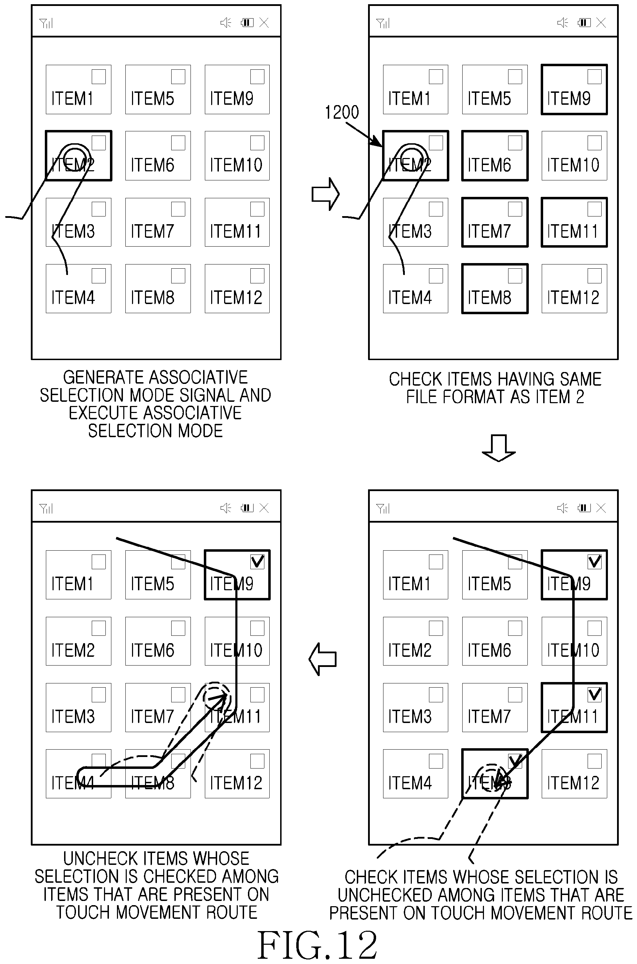

FIG. 12 illustrates one example the associative multi selection mode of FIG. 7.

Referring to FIG. 12, if an associative multi selection signal is generated in an unspecified item 1200 (in this example, an item 2) among displayed items, an associative multi selection mode is executed. If the associative multi selection mode is executed, items 2, 6, 7, 8, 9 and 11 having the same file format as the item 2 are checked as selected. Then, items among the items having the same file format as the item 2 may be selected or deselected. If a touch movement occurs, items 8, 9 and 11 whose selection is unchecked among the items that are present on the touch movement route are checked as selected. In addition, items 8 and 11 whose selection is checked among the items that are present on the touch movement route is unchecked.

Consequently, the item selecting methods according to the embodiments of the present invention can easily select multiple items.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Although the invention has been shown and described with reference to certain embodiments thereof, it will be understood by those skilled in the art that various changes in form and details may be made therein without departing from the scope of the invention as defined by the appended claims. Therefore, the scope of the invention is defined not by the detailed description of the invention but by the appended claims, and all differences within the scope will be construed as being included in the present invention.

## Claims

1. A method for selecting at least one item in an electronic device using one of a touch screen and a mouse, the method comprising:
displaying a plurality of items in a region of the touch screen;
detecting an input by using one of the touch screen and the mouse, on a point which is a vacant of the plurality of items in the region, wherein the input is maintained for more than a predetermined time;
in response to detecting the input on the point, entering a multi-item selection mode of the electronic device to display a menu list as a pop-up window for classifying the plurality of items, wherein the menu list is displayed adjacent to the point;
detecting another input for selecting an option among a plurality of options in the menu list, wherein the plurality of options indicate different file formats;
in response to detecting the other input for selecting the option in the menu list, identifying at least one item that has a file format corresponding to a file format of the selected option among the plurality of the items; and
displaying the at least one item with a selected status while displaying the plurality of the items.

2. The method of claim 1, wherein the different file formats indicated by the plurality of options comprise at least one of a photo, a video, and a text.

3. An electronic device comprising a display device, an input device such as a a touch screen or a mouse, and a controller, the electronic device being arranged to perform a method according to any preceding claim.

## Patentansprüche

1. Verfahren zur Auswahl mindestens eines Punktes in einem elektronischen Gerät mit einem von einem Touchscreen und einer Maus, wobei das Verfahren umfasst:
Anzeigen einer Vielzahl von Punkten in einem Bereich des Touchscreens;
Erkennen einer Eingabe durch Verwendung eines des Touchscreens und der Maus an einer Stelle, die ein leerer der Vielzahl von Punkten in dem Bereich ist, wobei die Eingabe für mehr als eine vorbestimmte Zeit bestehen bleibt;
als Antwort auf das Erkennen der Eingabe an der Stelle, Übergang zu einem Mehrpunkt-Auswahlmodus des elektronischen Gerätes, um eine Menüliste als Pop-up-Fenster zum Klassifizieren der Vielzahl von Punkten anzuzeigen, wobei die Menüliste neben der Stelle angezeigt wird;
Erkennen einer anderen Eingabe zur Auswahl einer Option unter einer Vielzahl von Optionen in der Menüliste, wobei die Vielzahl von Optionen verschiedene Dateiformate angibt;
als Antwort auf das Erkennen der anderen Eingabe zur Auswahl der Option in der Menüliste, Identifizieren mindestens eines Punktes, der ein Dateiformat aufweist, das einem Dateiformat der ausgewählten Option unter der Vielzahl der Punkte entspricht; und
Anzeigen des mindestens einen Punktes mit einem ausgewählten Status während des Anzeigens der Vielzahl der Punkte.

2. Verfahren nach Anspruch 1, wobei die von der Vielzahl von Optionen angegebenen verschiedenen Dateiformate mindestens eines von einem Foto, einem Video und einem Text umfassen.

3. Elektronisches Gerät umfassend ein Anzeigegerät, ein Eingabegerät wie einem Touchscreen oder einer Maus sowie eine Steuerung, wobei das elektronische Gerät ausgelegt ist, um ein Verfahren nach einem vorhergehenden Anspruch durchzuführen.

## Revendications

1. Procédé de sélection d'au moins un élément dans un dispositif électronique en utilisant un écran tactile et une souris, le procédé comprenant :
l'affichage d'une pluralité d'éléments dans une zone de l'écran tactile ; la détection d'une entrée en utilisant l'un de l'écran tactile et de la souris, sur un point qui est vacant de la pluralité d'éléments dans la zone, l'entrée étant maintenue plus longtemps qu'un temps prédéterminé ;
en réponse à la détection de l'entrée sur le point, l'entrée dans un mode de sélection multi-éléments du dispositif électronique pour afficher une liste de menus en tant que fenêtre contextuelle pour classer la pluralité d'éléments, la liste de menus étant affichée à côté du point ;
la détection d'une autre entrée pour sélectionner une option parmi une pluralité d'options dans la liste de menus, la pluralité d'options indiquant différents formats de fichier ;
en réponse à la détection de l'autre entrée pour sélectionner l'option dans la liste de menus, l'identification d'au moins un élément qui a un format de fichier correspondant à un format de fichier de l'option sélectionnée parmi la pluralité des éléments ; et
l'affichage de l'au moins un élément avec un statut sélectionné tout en affichant la pluralité d'éléments.

2. Procédé selon la revendication 1, dans lequel les différents formats de fichiers indiqués par la pluralité d'options comprennent au moins l'une parmi une photo, une vidéo et un texte.

3. Dispositif électronique comprenant un dispositif d'affichage, un dispositif d'entrée tel qu'un écran tactile ou une souris, et un contrôleur, le dispositif électronique étant agencé pour exécuter un procédé selon l'une quelconque des revendications précédentes.
